# EUROPÄISCHE PATENTSCHRIFT

(11) **EP 0 753 675 B1**
(45) Veröffentlichungstag und Bekanntmachung des Hinweises auf die Patenterteilung: **18.12.2002**
(21) Anmeldenummer: 96110905.5
(22) Anmeldetag: 05.07.1996
(51) Int. Cl.: F16B 41/00, F16B 43/00, F16B 5/02, F16B 1/00

(54) **Befestigerzusammensetzung**
Fastening device
Dispositif de fixation

(30) Priorität: 14.07.1995 DE 29511400 U
(43) Veröffentlichungstag der Anmeldung: 15.01.1997
(60) Teilanmeldung: 02014829.2
(73) Patentinhaber: ITW BEFESTIGUNGSSYSTEME GmbH, D-58642 Iserlohn (DE)
(72) Erfinder: Kirchhoff, Peter, D-58749 Wickede (DE)
(74) Vertreter: Patentanwälte Hauck, Graalfs, Wehnert, Döring, Siemons, Schildberg

(56) Entgegenhaltungen:
- CH-A- 442 388
- DE-C- 4 310 002
- DE-U- 29 511 400
- FR-A- 1 406 590
- US-A- 5 020 951
- US-A- 5 255 647

## Beschreibung

Die Erfindung bezieht sich auf eine Befestigerzusammensetzung zum Verbinden eines ersten Werkstückes mit einer Bohrung und eines zweiten Werkstückes mit einer Gewindebohrung nach dem Oberbegriff des Anspruches 1.

Befestigerzusammensetzungen der eingangs genannten Art dienen insbesondere der Befestigung von Ventildeckeln an Zylinderköpfen von Verbrennungsmotoren. Die Axialverschieblichkeit der Schraube in der Hülse begünstigt die Montage des ersten und des zweiten Werkstückes. Das erste Werkstück kann nämlich mit darin vormontierter Befestigerzusammensetzung auf dem zweiten Werkstück plaziert werden, ohne daß die Befestigerzusammensetzung oder auch nur die Schraube aus dem ersten Werkstück herausgedrückt wird. Die Axialverschieblichkeit des Schaftes in der Hülse ermöglicht nämlich ein Ausweichen der aus dem ersten Werkstück herausragenden Schraube vor dem zweiten Werkstück, wobei die Hülse bzw. die Durchführung ihren Sitz im ersten Werkstück beibehalten kann. Zugleich ist die Schraube durch ihre unverlierbare Anbringung in der Hülse gesichert, so daß die Befestigerzusammensetzung nicht zerfällt.

Aus der EP-B1-0 272 642 ist eine Befestigerzusammensetzung der eingangs erwähnten Art bekannt, bei der zur unverlierbaren Anbringung der Schraube in der Hülse auf dem Schaft in einem Abstand vom Kopf mehrere Vorsprünge angeordnet sind. Den Vorsprüngen ist ein verkleinerter Innendurchmesser der Hülse in Form eines nach innen gerichteten Wulstes unterhalb eines kopfseitigen Flansches zugeordnet. Folglich ist die Hülse auf dem Schaft verschiebbar, bis der Wulst gegen die Vorsprünge stößt. Außen auf der Hülse sitzt eine Durchführung aus Gummi, die einer elastischen Abstützung am ersten Werkstück dient.

Bei dieser Befestigerzusammensetzung erfordert die Herstellung der Vorsprünge auf den Schraubenschaft durch Rändeln einen erhöhten Aufwand, der sich in den Kosten niederschlägt. Auch die Herstellung der Hülse ist aufwendig, weil sie zum Erzeugen des Wulstes von der kopfabgewandten Seite her innen aufgeweitet werden muß. Außerdem ist die relativ lange Hülse nicht durch ein Tiefziehverfahren herstellbar bzw. kann der große Flansch nicht durch ein Rohrendbearbeitungsverfahren angebracht werden. Ferner kann es beim Einsatz der Befestigerzusammensetzung im Feuchtebereich infolge von Unebenheiten in den Flanschen zu Undichtigkeiten der Verbindung kommen. Zwischen einem kleinen Fußflansch der Hülse und dessen Aufstandsfläche auf dem zweiten Werkstück kann nämlich Medium eintreten und zwischen dem kopfseitigen Flansch der Hülse und dem Kopf der Schraube wieder austreten. Zudem ist nachteilig, daß bei der Montage ein Flansch der Hülse durch das Gummi der Durchführung gepreßt werden muß. Die Aufweitung des Gummis ist jedoch durch die Bildung von Rissen begrenzt, so daß der durchzupressende Flansch einen bestimmten Durchmesser nicht überschreiten darf. Die Anforderungen können daher von dieser Befestigerzusammensetzung nicht immer erfüllt werden.

Aus der US 5 255 647 ist eine Befestigerzusammensetzung bekannt, die eine Durchführung aus einem elastomeren Material aufweist, die mit noppenartigen Vorsprüngen Löcher einer Hülse durchgreift. Die noppenartigen Vorsprünge stützen sich auf vier kleinen Abschnitte des Umfangs des oberen Abschnittes des Schaftes einer Schraube ab. Infolgedessen verbleiben im Bereich der Noppen vier Ringspaltabschnitte zwischen dem Innendurchmesser der Hülse und dem Schaft. Hierdurch ist es möglich, daß eine Flüssigkeit zwischen dem Fuß der Hülse und einem ersten Werkstück in den Spalt zwischen Hülse und Schaft eintritt, diesen passiert und zwischen Schraubenkopf und dem Flansch der Hülse austritt.

Davon ausgehend liegt der Erfindung die Aufgabe zugrunde, eine Befestigerzusammensetzung mit verbesserter Dichtigkeit zu schaffen.

Die Aufgabe wird durch eine Befestigerzusammensetzung mit den Merkmalen des Anspruches 1 gelöst. Vorteilhafte Ausgestaltungen derselben sind in den Unteransprüchen angegeben.

Bei der erfindungsgemäßen Befestigerzusammensetzung hat die Hülse an ihrem kopfseitigen Ende radiale Öffnungen, die von Vorsprüngen der Durchführung durchgriffen werden, welche in die Hülse hineinragen und im Bereich des oberen Schaftabschnittes das Gewinde der Schraube hintergreifen. Somit ermöglichen die Vorsprünge, die Hülse von einer kopfnahen Position, in der so weit wie möglich an den Kopf der Schraube herangeschoben ist, in eine kopfferne Position zu verschieben, in der die Vorsprünge gegen das Gewinde der Schraube treffen und ein weiteres Verschieben verhindern. Eine relative Verschieblichkeit von Hülse bzw. Durchführung zur Schraube unter Sicherung dieser Bauteile aneinander wird somit erreicht, ohne daß in aufwendiger Weise die Schraube mit Vorsprüngen und die Hülse mit einem Wulst versehen werden müßten. Ferner ist die Hülse mit den Öffnungen einfacher als die Hülse mit Aufweitung herstellbar. Auch kann die Durchführung aus elastomerem Material mit den Vorsprüngen am Innenumfang einfach hergestellt werden. Eine fertige Durchführung kann nachträglich auf der Hülse montiert werden. Die Durchführung ist aber auch durch Umspritzen der Hülse herstellbar, so daß eine Montage der Durchführung entfällt. Als Material für die Durchführung kommt insbesondere Gummi oder ein thermoplastisches Elastomer in Betracht, das im Spritzgußverfahren verarbeitet werden kann. Infolge der Elastizität der Vorsprünge ist die Hülse auch mit einer darauf sitzenden Durchführung leicht auf den Schaft der Schraube montierbar.

Die Vorsprünge können verschiedene geometrische Formen aufweisen. Die Vorsprünge sind im Inneren der Hülse durch einen Ring aus elastomerem Material verbunden, der als Dichtring eine Abdichtung zwischen dem gewindefesten Schaft der Schraube und der Hülse bewirkt. Der Schraubenschaft kann direkt unterhalb des Kopfes eine Verdickung haben, auf der sich der Ring bei kopfnaher Lage der Hülse zusammenpreßt und damit unter erhöhter Dichtwirkung abstützt.

Die Hülse kann einfach gemäß denAnforderungen im Kopf- bzw. Fußende mit einem Flansch verbunden sein. Statt eines kopfseitigen Flansches kann zwischen Kopf und Hülse eine Scheibe auf dem Schaft der Schraube angeordnet sein. Ferner kann die Hülse ein Rohrabschnitt sein, der eine ausreichend dicke Wand für eine direkte Abstützung auf dem zweiten Werkstück aufweisen kann.

Die dem Kopf zugewandte Stirnseite der Durchführung kann mindestens eine umlaufende Dichtlippe haben, die sich dichtend gegen die Unterseite des Kopfes, eines Flansches oder einer Scheibe legt.

Nachfolgend wird die Erfindung anhand einiger Ausführungsbeispiele mit Bezug auf die anliegenden Zeichnungen näher beschrieben. In den Zeichnungen zeigen:
- Fig. 1 und 2: Befestigerzusammensetzung mit kopfseitigem Hülsenflansch im Längsschnitt (Fig. 1) und in der Draufsicht (Fig. 2);
- Fig. 3 und 4: die Durchführung desselben Befestigers im Längsschnitt (Fig. 3) und in der Draufsicht (Fig. 4);
- Fig. 5 und 6: Befestigerzusammensetzung mit einer Scheibe im Längsschnitt (Fig. 5) und in der Draufsicht (Fig. 6);
- Fig. 7 und 8: Befestigerzusammensetzung mit vergrößertem Kopf im Längsschnitt (Fig. 7) und in der Draufsicht (Fig. 8);
- Fig. 9 und 10: Befestigerzusammensetzung mit Rohrabschnitt als Hülse im Längsschnitt (Fig. 9) und in der Draufsicht (Fig. 10);
- Fig. 11 und 12: Befestigerzusammensetzung mit Verdickung unter dem Schraubenkopf im Längsschnitt (Fig. 11) und in der Draufsicht (Fig. 12).

Nachfolgend werden für übereinstimmende Merkmale verschiedene Befestigerzusammensetzungen identische Bezugsziffern verwendet.

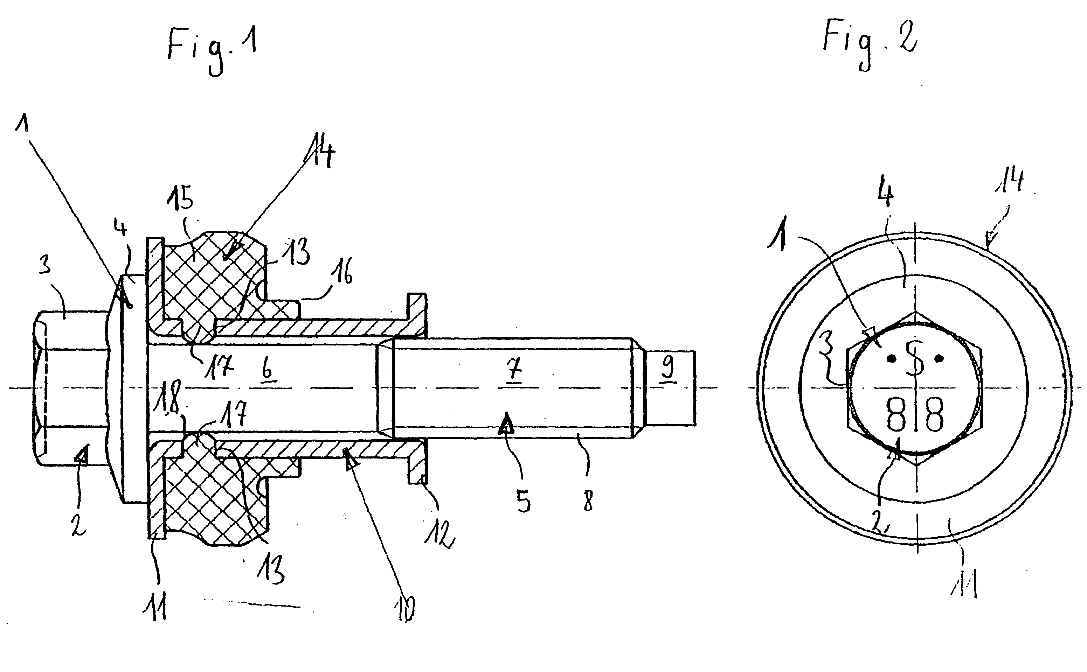

Die Befestigerzusammensetzung gemäß Fig. 1 bis 4 hat eine Schraube 1, die einen Kopf 2 mit einem Sechskant 3 oder einem anderen Antrieb und einer Klemmschulter 4 aufweist. Mit dem Kopf 2 ist ein Schaft 5 verbunden, der einen oberen, gewindelosen Schaftabschnitt 6 und einen unteren Schaftabschnitt 7 mit einem Gewinde 8 aufweist. Der Außendurchmesser des Gewindes 8 ist größer als der Durchmesser des oberen Schaftabschnittes 6. Entgegengesetzt zum Kopf 2 hat der Schaft 5 im Bereich eines kurzen zylindrischen Einführabschnittes 9 seinen geringsten Durchmesser.

Auf dem Flansch 5 sitzt eine zylindrische Hülse 10, deren Außendurchmesser geringfügig den Außendurchmesser des Gewindes 8 überschreitet, so daß sie leicht über den Schaft 5 schiebbar ist. An ihrem kopfseitigen Ende hat die metallische Hülse 10 einen großen Flansch 11, der an der Unterseite der Klemmfläche 4 anliegt. An ihrem fußseitigen Ende ist die Hülse 10 mit einem kleineren Flansch 12 versehen.

Nahe des Flansches 11 weist die Hülse 10 zwei einander diametral gegenüberliegende, radiale Öffnungen oder Durchbohrungen 13 auf. Aufgrund einer Herstellbarkeitsprüfung kann auch eine andere Anzahl Durchbohrungen 13 in Betracht kommen.

Unterhalb des Flansches 11 sitzt auf der Hülse 10 eine Durchführung 14 aus einem elastomeren Material. Die Durchführung 14 hat einen ringscheibenförmigen Abschnitt 15, der sich stirnseitig am Flansch 11 abstützt. An der entgegengesetzten Stirnseite ist die Durchführung 14 mit einer Manschette 16 versehen.

Die Manschette 16 sowie der ringförmige Abschnitt 15 liegen innen eng an der zylindrischen Hülse 10 an. Der ringförmige Abschnitt 15 hat innen zwei Vorsprünge 17, die durch die Öffnungen 13 hindurchtreten und in die Hülse 10 hineinragen.

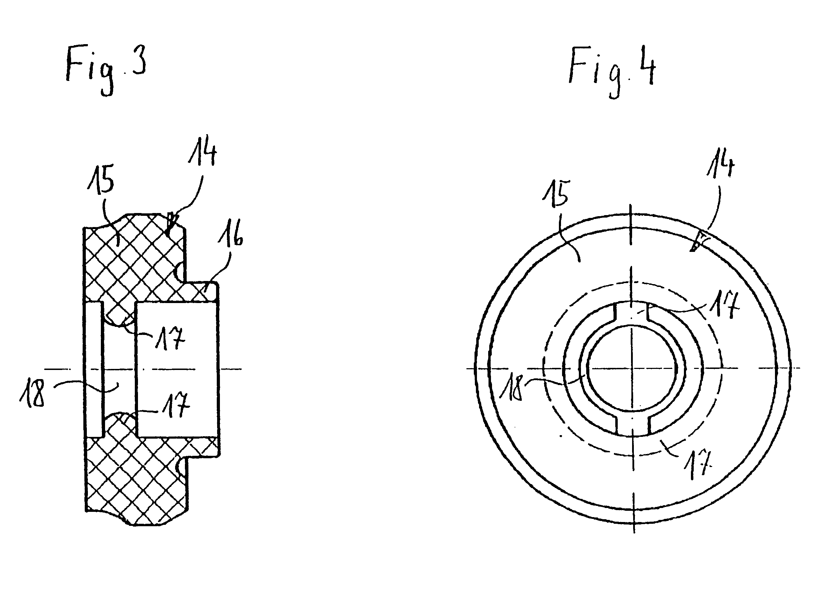

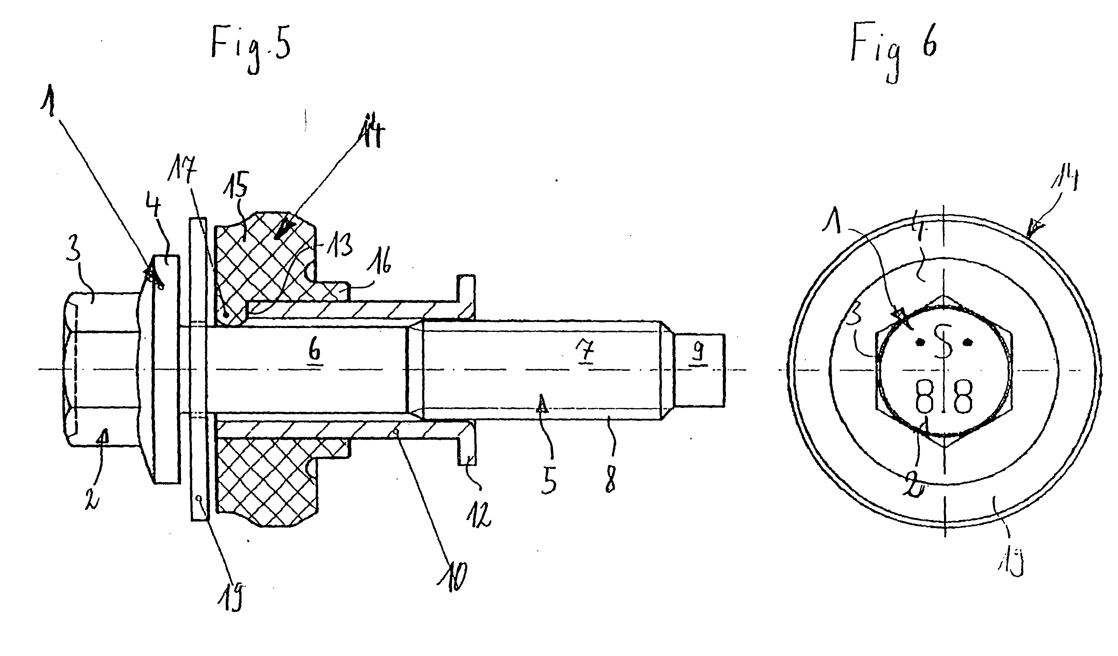

Wie besser aus den Fig. 3 und 4 ersichtlich ist, sind die einander diametral gegenüberliegenden Vorsprünge 17 an ihren inneren Enden von einem umlaufenden Ring 18 verbunden. Die gesamte Durchführung 14 aus ringförmigem Abschnitt 15, Manschette 16, Vorsprüngen 17 und Ring 18 besteht aus demselben elastomeren Material.

Der Innendurchmesser des Ringes 18 ist kleiner als der Außendurchmesser des Gewindes 8 und etwa gleich groß oder etwas kleiner als der Durchmesser des oberen Schaftabschnittes 6. Infolgedessen liegt die Durchführung 14 mit ihrem Ring 18 dichtend am oberen Schaftabschnitt 6 an.

Die Flansche 11, 12 sind mittels üblicher Fertigungsverfahren (z.B. Tiefziehverfahren, Rohrendbearbeitungsverfahren, Fertigung als Drehteil) an der Hülse 10 ausgebildet. Die Durchführung 14 ist um die Hülse 10 gespritzt. Danach ist die Hülse 10 mit der Durchführung 14 unter Verformung des Ringes 18 über den Schaft gedrückt, bis der Ring 18 den oberen Schaftabschnitt 6 erreicht. Dann ist die Befestigerzusammensetzung für die Verbindung zweier Werkstücke bereit.

Bei der Verbindung zweier Werkstücke ist die Durchführung 14 im ersten Werkstück abgestützt und die Hülse 10 durch eine Durchbohrung desselben erstreckt. Ihr kopfseitiger Flansch 11 ist an der Oberseite des ersten Werkstückes angeordnet und ihr fußseitiger Flansch 12 im Bereich seiner Unterseite, wobei er vorzugsweise auf einem zweiten Werkstück abgestützt ist. Beim Aufsetzen der im ersten Werkstück vormontierten Befestigerzusammensetzung auf das zweite Werkstück kann die Schraube 1 in der Hülse 10 verrutschen, bis das Gewinde 8 gegen den Ring 18 stößt, so daß die Befestigerzusammensetzung bzw. die Schraube 1 nicht aus dem ersten Werkstück herausgedrückt wird. Wenn das erste Werkstück korrekt auf dem zweiten plaziert ist, kann die Schraube 1 mit ihrem unteren Schaftabschnitt 7 und dem darauf befindlichen Gewinde 8 in die Gewindebohrung des zweiten Werkstückes eingedreht werden.

Der Ring 18 befestigt nicht nur die Hülse 10 auf der Schraube 1, sondern dichtet zugleich den Spalt zwischen Schaft 5 und Hülse 10 ab.

Auch bei den nachfolgenden Ausführungsbeispielen sind die Vorsprünge 17 an ihren inneren Enden jeweils durch einen umlaufenden Ring 18 verbunden, der jedoch in den Zeichnungen nicht dargestellt ist.

Bei der Befestigerzusammensetzung gemäß Fig. 5 und 6 hat die Hülse 10 nur einen fußseitigen Flansch 12 und ist nicht mit einem kopfseitigen Flansch versehen. Statt dessen ist auf dem oberen Schaftabschnitt eine Unterlegscheibe 19 plaziert, deren Innendurchmesser den Außendurchmesser des Gewindes 8 unterschreitet und die durch Walzen des Gewindes 8 unverlierbar mit der Schraube 1 verbunden ist.

Die Hülse 10 weist nahe ihrem kopfseitigen Ende 3 über ihren Umfang gleichmäßig verteilte radiale Öffnungen 13 auf, in die Vorsprünge 17 der Durchführung 14 eingreifen.

Durch die Unterlegscheibe 19 wird ein relativ großer Auflagedurchmesser für die Stirnseite der Durchführung 14 sichergestellt, wobei Probleme einer Flanschausbildung an der Hülse 10 entfallen. Die Hülse 10 kann wiederum mit dem Material der Durchführung 14 umspritzt sein, welches durch die Öffnungen 13 in die Hülse 10 eindringt und dort einzelne, nach innen stehende Vorsprünge 17 oder Noppen bildet. Die Vorsprünge 14 liegen an dem oberen Schaftabschnitt 6 an. Sie befestigen die Hülse 10 auf der Schraube 1, indem sie hinter das Gewinde 8 schnappen, wobei die Schraube in axialer Richtung der Hülse 10 verschiebbar bleibt.

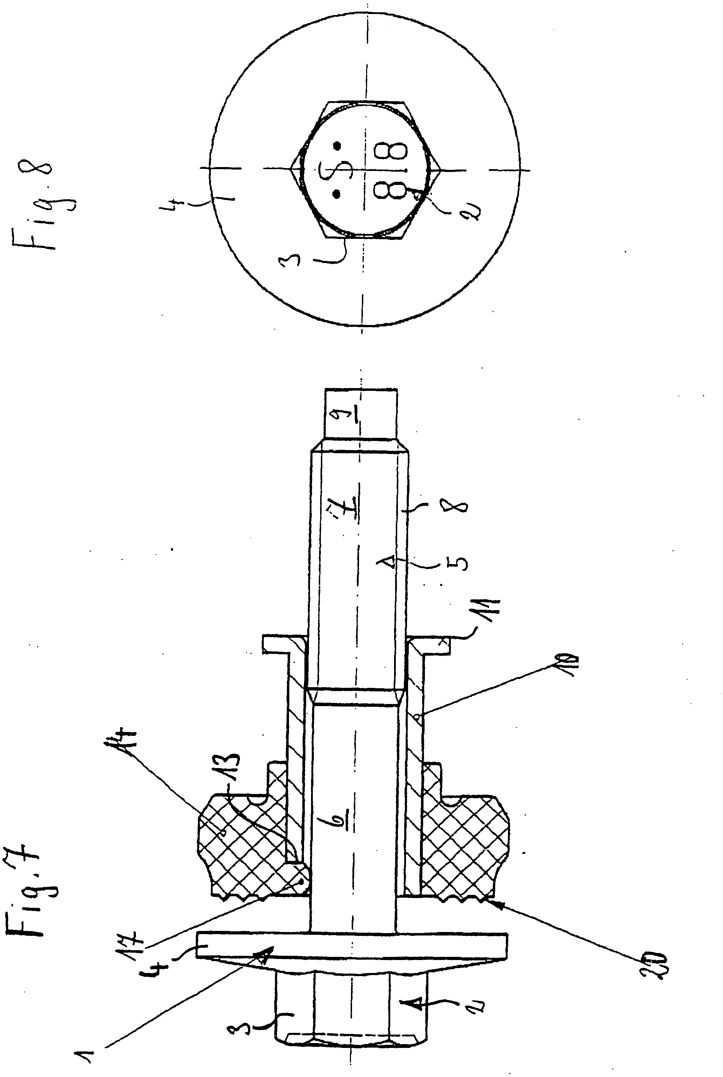

Gemäß Fig. 7 und 8 hat die Schraube 1 einen Kopf 2, dessen Klemmscheibe 4 einen größeren Durchmesser als bei den vorherigen Ausführungsformen aufweist. Die Hülse 10 ist wie in den Fig. 5 und 6 lediglich mit einem Fußflansch 12 und mehreren Öffnungen am kopfseitigen Ende ausgestaltet. Auch die Durchführung 14 entspricht weitgehend derjenigen des vorherigen Ausführungsbeispieles. Sie hat ebenfalls die Öffnungen 13 durchgreifende Vorsprünge 17, die auf dem gewindefreien Schaftabschnitt 16 anliegen, wodurch eine axiale Verschiebbarkeit der Schraube 1 und Sicherung derselben in der Hülse 10 erreicht wird.

In einem weiteren Unterschied zur vorherigen Ausführung weist die elastomere Durchführung 14 an ihrer oberen Stirnfläche drei umlaufende Dichtlippen 20 auf, welche im eingebauten Zustand eine Abdichtung zwischen Schraube 1 und Hülse 10 gewährleisten.

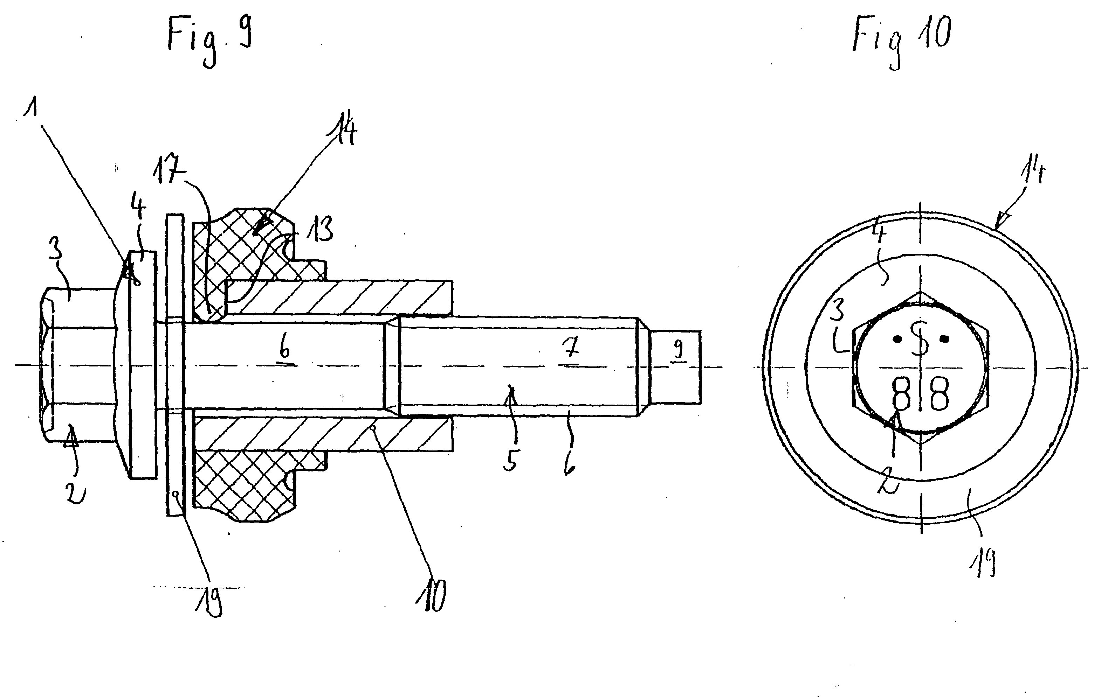

Die Ausführungsform der Fig. 9 bis 10 weist wie die der Fig. 5 und 6 auf dem oberen Schaftabschnitt 6 der Schraube 1 eine Scheibe 19 auf. Im Unterschied dazu ist die Hülse 10 jedoch als relativ dickwandiger Rohrabschnitt ausgebildet und auch nicht mit einem Fußflansch versehen.

Der Rohrabschnitt 10 weist jedoch entsprechend der Hülse an seinem kopfseitigen Ende radiale Öffnungen 13 auf. Dort ist er ebenfalls mit einer Durchführung 14 umspritzt, deren Vorsprünge 17 die Öffnungen 13 durchdringen und als einzelne Noppen am gewindefreien Schaftabschnitt 6 der Schraube 1 anliegen. Damit ist auch der Rohrabschnitt 10 auf der Schraube 1 gesichert und begrenzt axial zu dieser verschiebbar. Die Wanddicke des Rohrabschnittes 10 ist so gewählt, daß trotz fehlendem Fußflansch die notwendige Flächenpressung für das Drücken gegen ein zweites Werkstück gewährleistet ist. Eine Hülse 10 dieser Ausführung ist mit geringem fertigungstechnischem Aufwand herstellbar und reduziert die Kosten.

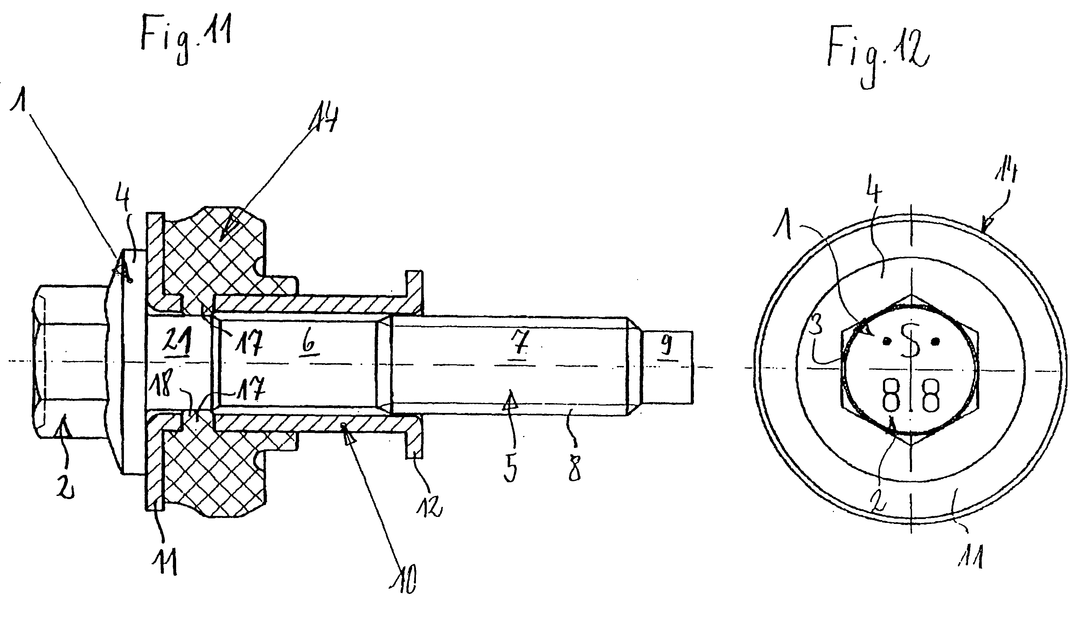

Die Ausführungsform der Fig. 11 und 12 stimmt weitgehend mit derjenigen der Fig. 1 bis 4 überein. Im Unterschied zu dieser weist jedoch die Schraube 1 zwischen Kopf 2 und einem verkürzten gewindefreien Schaftabschnitt 6 eine Verdickung 21 auf. Der Durchmesser der Verdickung 21 liegt zwischen dem Durchmesser des gewindefreien Schaftabschnittes 6 und dem Außendurchmesser des Gewindes 8.

Wenn die Hülse 10 mit ihrem großen Flansch 11 gegen die Unterseite der Klemmscheibe 4 geschoben ist, ruht der umlaufende Ring 18 auf der Verdickung 21. Hierdurch wird der Ring 18 stärker zusammengepreßt und ein höherer Dichteffekt erzielt. Der Ring 18 stellt zugleich im Zusammenwirken mit dem Gewinde 8 eine begrenzte Verschiebbarkeit der Schraube 1 in der Hülse 10 sicher.

## Patentansprüche

1. Befestigerzusammensetzung zum Verbinden eines ersten Werkstückes mit einer Bohrung und eines zweiten Werkstückes mit einer Gewindebohrung, mit einer Schraube (1), die einen Kopf (2) und einen Schaft (5) aufweist, wobei der Schaft (5) einen gewindelosen oberen Schaftabschnitt (6) und einen unteren Schaftabschnitt (7) mit einem radial über den oberen Schaftabschnitt (6) vorstehenden Gewinde (8) aufweist, einer den Schaft (5) axial verschieblich aufnehmenden Hülse (10), einer die Hülse (10) aufnehmenden Durchführung (14) aus elastomerem Material und radial vorstehenden Mitteln (8, 17) zum Sichern der Schraube (1) in der Hülse (10), wobei die Hülse (10) nahe ihrem kopfseitigen Ende radiale Öffnungen (13) hat und die Durchführung (14) die Öffnungen mit Vorsprüngen (17) aus elastomerem Material durchgreift, die in die Hülse (10) hineinragen und im Bereich des oberen Schaftabschnittes (6) das Gewinde (8) der Schraube (1) hintergreifen, **dadurch gekennzeichnet, daß** die Vorsprünge (17) an der Innenseite der Hülse (14) durch einen umlaufenden Ring (18) aus elastomerem Material verbunden sind.

2. Befestigerzusammensetzung nach Anspruch 1, **dadurch gekennzeichnet, daß** die Durchführung (14) kopfseitig mindestens eine umlaufende Dichtlippe (20) hat.

3. Befestigerzusammensetzung nach Anspruch 1 oder 2, **dadurch gekennzeichnet, daß** der Schaft (5) zwischen oberem Schaftabschnitt (6) und Kopf (2) eine Verdickung (21) hat, auf der sich der umlaufende Ring (18) bei zum Kopf (2) geschobener Hülse (10) abstützt.

4. Befestigerzusammensetzung nach einem der Ansprüche 1 bis 3, **dadurch gekennzeichnet, daß** die Hülse (10) zwei Öffnungen (13) und die Durchführung (14) zwei Vorsprünge (17) hat.

5. Befestigerzusammensetzung nach einem der Ansprüche 1 bis 4, **dadurch gekennzeichnet, daß** die Durchführung (14) kopfseitig einen ringförmigen Abschnitt (15) und fußseitig einen manschettenförmigen Abschnitt (16) hat.

6. Befestigerzusammensetzung nach einem der Ansprüche 1 bis 5, **dadurch gekennzeichnet, daß** die Hülse (10) mit dem Material der Durchführung (14) umspritzt ist.

7. Befestigerzusammensetzung nach einem der Ansprüche 1 bis 6, **dadurch gekennzeichnet, daß** die Hülse (10) kopfseitig und/oder fußseitig einen Flansch (11, 12) hat.

8. Befestigerzusammensetzung nach einem der Ansprüche 1 bis 7, **dadurch gekennzeichnet, daß** zwischen Kopf (2) und Hülse (10) eine Scheibe (19) auf dem Schaft (5) angeordnet ist.

9. Befestigerzusammensetzung nach Anspruch 8, **dadurch gekennzeichnet, daß** die Scheibe (19) das Gewinde (8) hintergreifend auf dem oberen Schaftabschnitt (6) angeordnet ist.

10. Befestigerzusammensetzung nach einem der Ansprüche 1 bis 9, **dadurch gekennzeichnet, daß** die Hülse (10) ein Rohrabschnitt ist.

## Claims

1. A fastener assembly for joining a first workpiece to a bore and a second workpiece to a threaded bore, comprising a screw (1) which has a head (2) and a shank (5) wherein the shank (5) has a non-threaded upper shank portion (6) and a lower shank portion (7) with a thread (8) radially projecting beyond the upper shank portion (6), a sleeve (10) receiving the shank (5) in an axially slidable way, a through bushing (14) made of an elastomeric material to receive the sleeve (10), and radially projecting means (8, 17) for securing the screw (1) within the sleeve (10) wherein the sleeve (10) has radial apertures near its headed-sided end and the through bushing (14) grips through the apertures by projections (17) made of an elastomeric material which extend into the sleeve (10) and grip behind the thread (8) of the screw (1) in the area of the upper shank portion (6), **characterized in that** the projections (17) are interconnected by a circumferential ring (18) made of an elastomeric material at the inside of the sleeve (14).

2. The fastener assembly as claimed in claim 1, **characterized in that** the through bushing (14) has at least one circumferential sealing lip (20) at its head side.

3. The fastener assembly as claimed in claim 1 or 2, **characterized in that** the shank (5), between the upper shank portion (6) and the head (2), has an enlargement (21) on which the circumferential ring (18) is supported when the sleeve (10) has been displaced to the head (2).

4. The fastener assembly as claimed in any one of claims 1 to 3, **characterized in that** the sleeve (10) has two apertures (13) and the through bushing (14) has two projections (17).

5. The fastener assembly as claimed in any one of claims 1 to 4, **characterized in that** the through bushing (14) has an annular portion (15) at its head side and a socket-shaped portion (16) at its tail side.

6. The fastener assembly as claimed in any one of claims 1 to 5, **characterized in that** the sleeve (10) has injected therearound the material of the through bushing (14).

7. The fastener assembly as claimed in any one of claims 1 to 6, **characterized in that** the sleeve (10) has a flange (11, 12) at its head side and/or tail side.

8. The fastener assembly as claimed in any one of claims 1 to 7, **characterized in that** a disk (19) is disposed on the shank (5) between the head (2) and the sleeve (10).

9. The fastener assembly as claimed in claim 8, **characterized in that** said disk (19) is disposed on the upper shank portion (6) so as to grip behind the thread (8).

10. The fastener assembly as claimed in any one of claims 1 to 9, **characterized in that** the sleeve (10) is a tube portion.

## Revendications

1. Assemblage de fixation pour relier une première pièce dotée d'un alésage et une deuxième pièce dotée d'un alésage fileté, comportant une vis (1) présentant une tête (2) et une tige (5), la tige (5) présentant une section supérieure de tige (6) non filetée et une section inférieure de tige (7) comportant un filetage (8) faisant saillie radialement au-delà de la section supérieure de tige (6), un manchon (10) recevant la tige (5) de façon mobile dans le sens axial, une pièce de guidage (14), en matériau élastomère, recevant le manchon (10) et des moyens faisant saillie radialement (8, 17) pour bloquer la vis (1) dans le manchon (10), le manchon (10) ayant des ouvertures radiales (13) à proximité de son extrémité côté tête et la pièce de guidage (14) pénétrant dans les ouvertures avec des saillies (17) en matériau élastomère qui débordent dans le manchon (10) et sont retenues par le filetage (8) de la vis (1) au niveau de la section supérieure de tige (6), **caractérisé en ce que** les saillies (17) sont reliées à l'intérieur du manchon (10) par un anneau périphérique (18) en matériau élastomère.

2. Assemblage de fixation selon revendication 1, **caractérisé en ce que** la pièce de guidage (14) possède côté tête au moins une lèvre d'étanchéité (20) périphérique.

3. Assemblage de fixation selon l'une des revendications 1 ou 2, **caractérisé en ce que** la tige (5) possède, entre la section supérieure de tige (6) et la tête (2) un épaississement (21) sur lequel s'appuie l'anneau périphérique (18) lorsque le manchon (10) est repoussé jusqu'à la tête (2).

4. Assemblage de fixation selon l'une des revendications 1 à 3, **caractérisé en ce que** le manchon (10) possède deux ouvertures (13) et la pièce de guidage (14) deux saillies (17).

5. Assemblage de fixation selon l'une des revendications 1 à 4, **caractérisé en ce que** la pièce de guidage (14) possède, côté tête, une section en forme d'anneau (15) et, côté base, une section en forme de manchette (16).

6. Assemblage de fixation selon l'une des revendications 1 à 5, **caractérisé en ce que** le manchon (10) est surmoulé par injection avec le matériau de la pièce de guidage (14).

7. Assemblage de fixation selon l'une des revendications 1 à 6, **caractérisé en ce que** le manchon (10), côté tête et/ou côté base, possède un collet (11, 12).

8. Assemblage de fixation selon l'une des revendications 1 à 7, **caractérisé en ce que** une rondelle (19), est placée sur la tige (5) entre la tête (2) et le manchon (10).

9. Assemblage de fixation selon revendication 8, **caractérisé en ce que** la rondelle (19) est placée sur la section supérieure de tige (6) de manière à être retenue par le filetage (8).

10. Assemblage de fixation selon l'une des revendications 1 à 9, **caractérisé en ce que** le manchon (10) est une section de tube.
